Europäisches Patentamt

(19) European Patent Office

Office européen des brevets

(11) EP 0 819 910 A1

(12) EUROPEAN PATENT APPLICATION

(43) Date of publication:
21.01.1998 Bulletin 1998/04

(51) Int. Cl.$^6$: G01B 11/275, G01B 7/315

(21) Application number: 96830391.7

(22) Date of filing: 15.07.1996

(84) Designated Contracting States:
AT BE CH DE DK ES FI FR GB GR IE IT LI LU MC
NL PT SE
Designated Extension States:
AL LT LV SI

(71) Applicant:
SIBONA S.r.l. in liquidazione
10122 Torino (IT)

(72) Inventors:
• Tamagnone, Adriano
10040 Lombriasco (Torino) (IT)
• Graglia, Gualtiero
10138 Torino (IT)

(74) Representative:
Marchitelli, Mauro et al
c/o JACOBACCI & PERANI S.p.A.
Corso Regio Parco, 27
10152 Torino (IT)

(54) A method and a system for measuring the toe-in of the wheels of a vehicle

(57) In order to measure the toe-in of the wheels of an axle of a vehicle, the wheels are placed on respective supports (12, 14) each of which is free to move in a plane substantially parallel to the axis of rotation of the respective wheel. Each support has engagement means (20, 22) for ensuring that the support follows the orientation of the respective wheel. The toe-in of the wheels is measured as a function of the angles of rotation of the supports (12, 14) relative to a predetermined reference position.

FIG. 1

**Description**

The present invention relates to a method and a system for measuring the toe-in of the wheels of a vehicle.

At the end of vehicle assembly lines there are generally stations for adjusting the attitude of the vehicle. One of the most frequent adjustments is to that of the toe-in of the wheels.

In a conventional system for measuring the toe-in of the wheels, the vehicle is placed above a pit with the wheels positioned on respective supports each of which has a pair of rollers which engage the tread of the tyre. Each support bears on a castor table and is free to move in a horizontal plane. The measurement system provides for the use of a pair of feeler rollers which are urged into contact with the sides of each wheel. The feeler rollers are mounted on a bar which is pivotable at the centre and a measuring device detects the angular position of the bar. A processing unit calculates the angle of toe-in between the wheels of the front axle and between the wheels of the rear axle on the basis of the data provided by the measuring devices.

Basically, the adjustment of the toe-in has the purpose of making the thrust axis of the front axle coincident with or at least parallel to the thrust axis of the rear axle of the vehicle. The system provides the operator with information relating to the measured toe-in value. On the basis of the information received from the system, the operator adjusts the toe-in by means of tie-rods of the kinematic steering mechanism of the vehicle until the toe-in is brought within a predetermined range. The measurement is carried out both with the wheels moving and with the wheels stationary and the feeler rollers are in contact with the tyres during their rotation. The main problem with this system consists of the need for periodical cleaning of the feeler rollers which become soiled by their rolling in contact with the sides of the wheels.

A system for contactless measurement of the alignment characteristics of the vehicle wheels is known from the document EP-A-0 280 941. In this system, the distances of two points, situated on the side of the wheel, from a stationary reference system are measured, for each wheel. The distances are measured by means of an optical triangulation device comprising a laser source which projects a geometrical figure directly onto the sides of the wheel and an image sensor which receives the reflected image of the geometrical figure. Processing means associated with the image sensor enable the characteristic alignment angles of the wheel, including the toe-in angle, to be calculated on the basis of the information contained in the reflected images of the geometrical figures projected onto the sides of the wheels.

The non-contact measurement system described in the aforementioned document EP-A-0 280 941 is affected by various problems connected with the need to process an image reflected by the side of the wheel. In effect, the tyre is a black body and is therefore a very poor reflector and thus requires the use of relatively powerful light sources. Moreover, the light projected onto the rubber gives rise to optical diffusion effects as well as to problems of scattering of light on the rubber. Moreover, the known system is based upon the assumption that the tread of the tyre is perpendicular to the side. When there are structural defects in the tyre the measurement of the toe-in angle is distorted. This system may also give rise to incorrect measurements if there are structural irregularities in the side of the tyre, for example, if the extreme point of the rounded profile of the side is not always at the same distance from the centre of the wheel. Moreover, writing, projecting edges and processing flash present on the side of the tyre considerably complicate the signal-processing software. Another problem is that the known system needs to identify a well-defined extreme point of the curved profile of the side and could be difficult to apply to tyres with super-recessed profiles which tend not to have an extreme point of the side profile. Other disadvantages of the known system can be attributed to interference by ambient light and heat radiation since the reading surface onto which the light image is projected is necessarily above the pit. This also involves the disadvantage of the occupation of a certain space outside the pit. Finally, given that the laser source is pointed towards the pit, it is necessary to adopt certain precautions to prevent problems for the operators.

The object of the present invention is to provide a method and a system for measuring the toe-in of the wheels of a vehicle which are not affected by the aforementioned problems.

According to the present invention, this object is achieved by a method and by a system having the characteristics which form the subject of the claims.

The present invention is based essentially on the concept of the calculation of the toe-in upon the basis of the measurement of the angle of rotation of the supports on which the wheels of the vehicle bear, in a plane parallel to the rotation axis of each wheel. In fact, these supports are free to move in a horizontal plane by virtue of a support system with a low coefficient of friction, typically constituted by balls or, alternatively, by a hydrostatic support. The invention is based upon the observation of the fact that the supports follow the angle of orientation of the wheels very precisely so that a measurement of the angle of rotation of the supports relative to a predetermined reference position enables the toe-in of the wheels to be determined.

The invention will now be described in detail with reference to the appended drawings, given purely by way of non-limiting example, in which:

Figure 1 is a schematic plan view showing the system according to the invention,

Figure 2 is a schematic perspective view of the part indicated by the arrow II in Figure 1,

Figure 3 is a schematic perspective view showing the non-contact system for measuring the angle of rotation of a support,

Figure 4 shows schematically the image received by an image sensor forming part of the measurement device,

Figure 5 is a schematic view of the components of the measurement device,

Figure 6 is a block diagram illustrating the operation of the measurement device,

Figure 7 is a table containing comparative data relating to the reliability of the measurement system according to the invention, and

Figures 8 and 9 are cartesian representations of the data contained in the table of Figure 7.

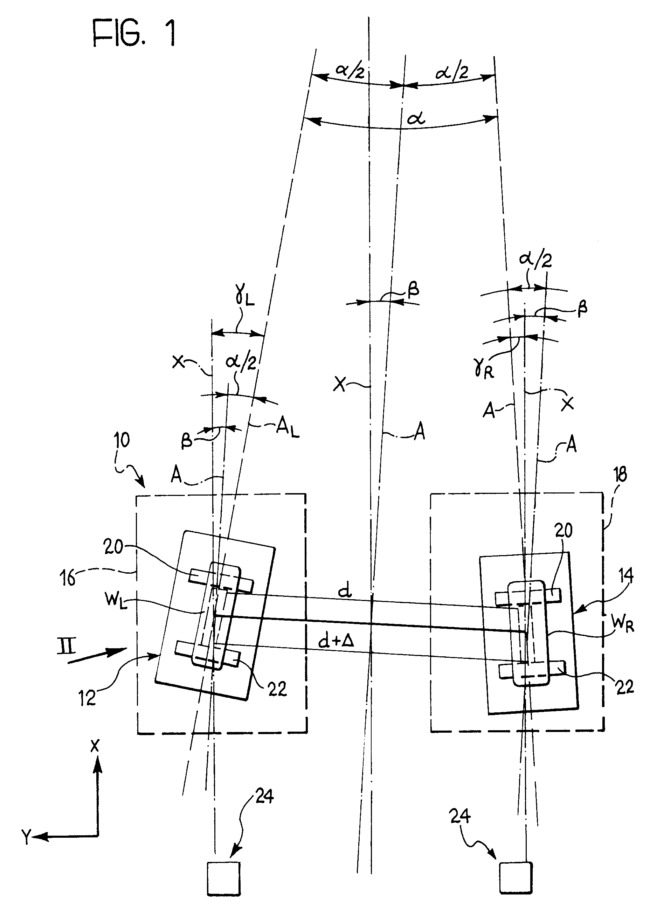

With reference to Figure 1, a system for measuring the toe-in between two wheels of an axle of a vehicle is schematically indicated 10. The left-hand and right-hand wheels are indicated $W_L$ and $W_R$, respectively. The wheels $W_L$ and $W_R$ are disposed on respective supports 12 and 14 each of which is free to move in a plane parallel to the axis of rotation of the respective wheel. The supports 12 and 14 are in turn carried by a stationary structure (not shown) by means of a low-friction support system formed, for example, by a castor table or by a flat hydrostatic bearing. The plane of movement of the supports 12 and 14 will generally be a horizontal plane. However, if the axes of rotation of the wheels were not perfectly horizontal, an adjustment mechanism could be provided, enabling the plane of movement of the supports 12, 14 to be arranged parallel to the axes of rotation of the wheels $W_L$ and $W_R$.

In Figure 1, the fields within which the supports 12 and 14 are free to float are indicated 16 and 18. As will be described below, in order to measure the toe-in correctly, it is necessary to check that the supports 12 and 14 are free to move in the plane and that they are therefore not in contact with lateral stops which restrict the movement capability of the supports which, in the view of Figure 1, have been shown schematically by the broken lines which define the outlines of the fields 16 and 18.

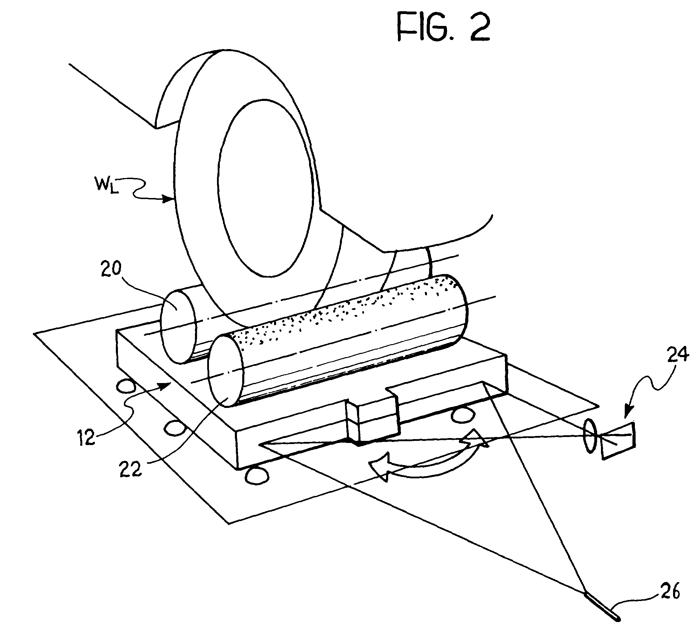

As can be seen in Figures 1 and 2, each support 12, 14 carries a pair of rollers 20, 22 rotatable about axes parallel to the axis of rotation of the respective wheel $W_L$, $W_R$. At least one of the two rollers 20, 22 may be motor-driven in order to impart a rotary movement to the wheel. The rollers 20, 22 constitute engagement means which can ensure that the supports 12, 14 follow the orientations of the respective wheels $W_L$, $W_R$. Although the rollers 20, 22 represent the preferred embodiment of these engagement means, it is intended that engagement means of a different kind could be used, provided that they have the purpose of ensuring that the supports 12, 14 are arranged in the same orientation as the wheels.

With reference to Figure 1, the straight lines obtained by the intersection of the median planes of the wheels $W_L$ and $W_R$ with the respective bearing planes are indicated $A_L$ and $A_R$. The straight lines $A_L$ and $A_R$ are referred to briefly below as the axis of the left-hand wheel and the axis of the right-hand wheel.

The toe-in angle $\alpha$ is defined as the angle formed between the straight lines $A_L$ and $A_R$. The bisector of the angle $\alpha$ is defined as the thrust axis A. The angle between the thrust axis A and the axis $A_L$ of the left-hand wheel is therefore $\alpha/2$ and, similarly, the angle between the thrust axis A and the axis $A_R$ of the right-hand wheel is $\alpha/2$.

In Figure 1, a stationary reference axis of the measurement system which does not depend upon the positioning of the vehicle is indicated X. In general, the thrust axis A will not coincide with the reference axis X and there will be a certain angle, indicated $\beta$, between the reference axis X and the thrust axis A.

Instead of being measured as an angle in degrees or in radians between the axis $A_L$ of the left-hand wheel and the axis $A_R$ of the right-hand wheel, the toe-in is often measured as the difference $\Delta$ between the edges of the rims of the wheels measured at the front and at the rear:

$$\Delta = (d+\Delta)-d \qquad \text{(Figure 1)}$$

The two definitions of the toe-in are compatible and it is possible to change from one to the other of the two forms of measurement of the toe-in simply by a knowledge of the diameters of the wheel rims.

Experimental tests carried out by the Applicant have shown that, when the wheels of the vehicle engage the rollers 20 and 22 of the supports 12, 14, these supports follow the orientation of the wheels very precisely, by virtue of their ability to move with low friction in a plane parallel to the axis of rotation of the wheels.

The toe-in measurement system according to the present invention is based upon the measurement of the angle of rotation of the supports 12, 14 relative to a predetermined reference position. In Figure 1, the support 12 has rotated through an angle $\gamma_L$ relative to the stationary reference axis X. It can be seen from Figure 1 that:

$$\gamma_L = \beta+\alpha/2 \qquad [1]$$

The support 14 has rotated through an angle $\gamma_R$ relative to the reference axis X. From Figure 1:

$$\gamma_R = \alpha/2 - \beta \qquad [2]$$

By adding formulae 1 and 2:

$$\gamma_L + \gamma_R = \beta + (\alpha/2) + (\alpha/2) - \beta = \alpha \qquad [3]$$

Formula 3 shows that the toe-in angle $\alpha$ is found by a measurement of the angles of rotation of the supports 12 and 14, regardless of the position of the vehicle relative to the stationary reference axis X. The system according to the invention does not therefore require precise positioning of the vehicle relative to stationary references. In order to carry out a correct measurement, it suffices for the wheels $W_L$, $W_R$ to engage the supports 12 and 14 and for these supports to be within the respective fields 16, 18 within which they are free to float.

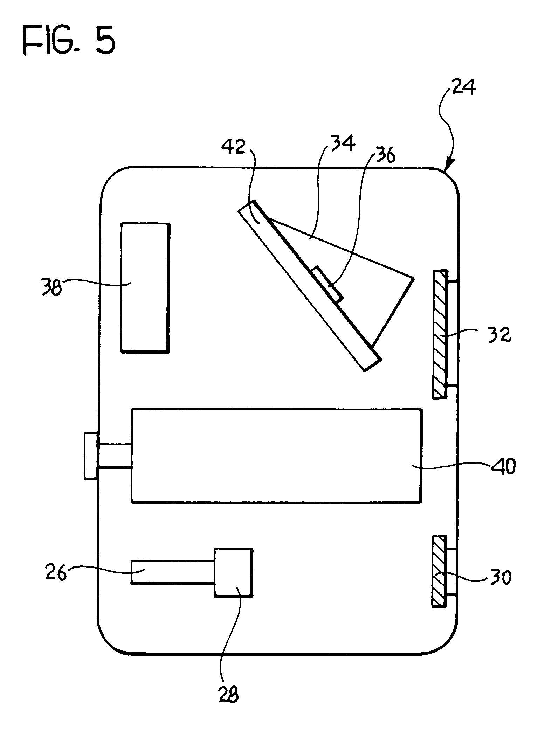

With reference to Figures 2 to 5, the angle of rotation of each support 12, 14 is preferably measured by means of a non-contact measurement device, generally indicated 24. The measurement device 24 comprises a light source 26 constituted, for example, by a laser diode which projects a beam of light onto the respective support 12, 14 or onto an element fixed thereto. The light source 26 is associated with a lens 28 which transforms the light beam coming from the laser 26 into a flat light beam so as to project a geometrical figure of substantially linear shape onto the support. As can be seen in Figure 5, the light beam comes out of the measurement device 24 through a window 30. A second window 32 enables the measurement field to be observed by an optical system 34 (constituted by a lens or by a mirror with a curved reflecting surface) which receives the image of the geometrical figure reflected by the support 12 or 14. The reflected image observed by the optical system 34 is focused onto an image sensor 36 constituted by a matrix of light-sensitive elements (pixels) which can detect the light reflected by the support. The positions of the illuminated elements on the geometrical structure of the sensor (line/column) enables the spatial position of the reflecting point to be obtained by means of a triangulation calculation mechanism, by virtue of the fact that the angle between the direction of the projection of the image and the direction of the reflection of the image is known. The image sensor 36 is an area sensor of the commercial type produced mainly for use in video cameras. With reference to Figure 5, the measurement device 24 also comprises a supply 38, a processing unit 40, and an interface 42 between the sensor 26 and the processing unit 40.

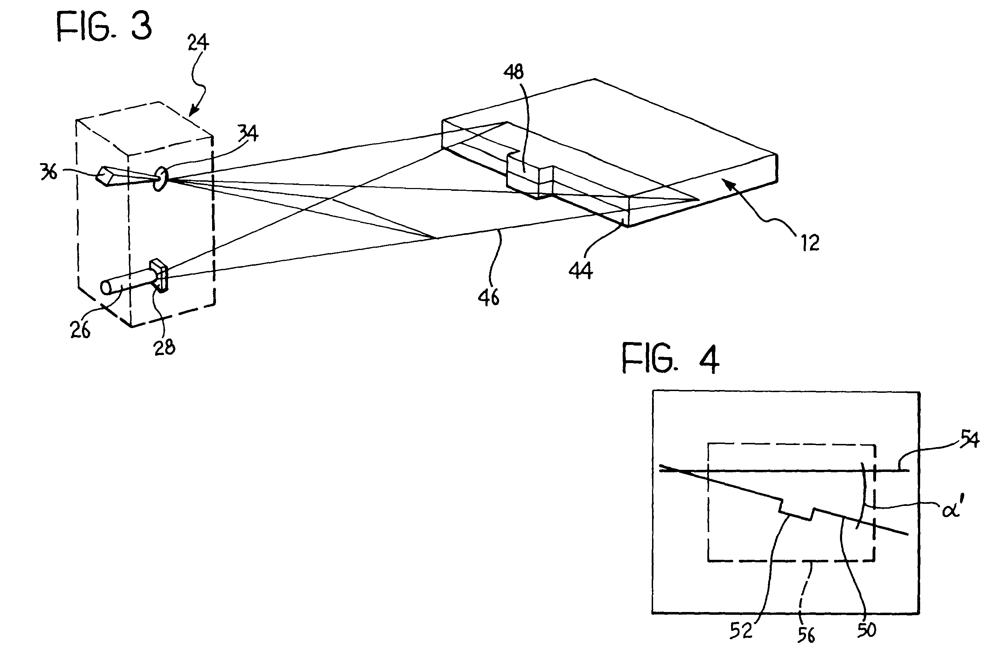

As shown schematically in Figure 3, the surface 44 of the support 12 onto which the light beam 46 is projected has a reference point 48 constituted, for example, by a projection or by a recess which has the purpose of creating an irregularity in the reflected image in order to determine the position of the support 12 in the plane.

Figure 4 shows schematically the shape of the geometrical figure 50 observed by the image sensor 36. The reflected image 50 has a substantially linear shape and has a discontinuity 52 corresponding to the reference point 48. The angle of inclination $\alpha'$ of the reflected image 50 to a reference axis 54 is proportional to the angle of rotation of the support 12 relative to the reference axis X. In Figure 4, the field within which the irregularity 52 of the reflected image 50 must be contained in order for the support 12 to be within the field in which it is free to float is indicated 56.

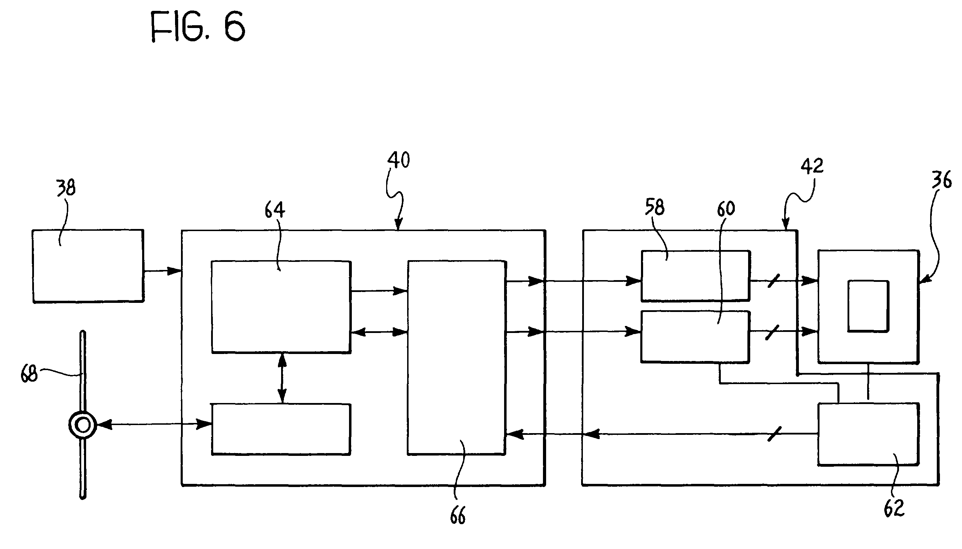

With reference to Figure 6, the interface 42 comprises circuits 58 and 60 for piloting the vertical and horizontal scanning (for lines and columns) of the pixels of the sensor 36. The interface circuit 42 also comprises an analog-digital converter 62 which provides the processing unit 40 with a datum, in the form of sets of six bits, indicative of the level of the signal of each pixel, that is, the intensity of the light falling on each pixel.

The processing unit 40 comprises a microcontroller 64 and logic control circuits 66 by means of which the processing unit 40 is connected to the interface 42 in order to control the piloting circuits 58, 60 and acquire the signals from the analog-digital converter 62.

The microcontroller 64 acquires the co-ordinates of the points detected line by line from the control and processing logic 66, constructing in a memory a profile corresponding to the image 50 which is reflected onto the surface of the sensor 36. The points vector indicative of the profile of the image is then processed in order to locate the theoretical measurement point or points by an algorithm for linearizing the image which corrects the effects resulting from the non-linearity of the relationship between the depth of the measurement field and the geometrical arrangement of the pixels. Finally, the co-ordinates of the point and the value of the angle $\alpha'$ measured are converted into physical quantities and transmitted to a central processor by means of a communications network 68.

The measurement device described above uses a light source and an image sensor situated in stationary positions. A first alternative is that of placing the light source and the image sensor on the floating support 12, 14. In this case, the light source projects a geometrical figure onto a stationary reference region and the sensor receives the image reflected by the reference region.

A further alternative is that of placing the image sensor on the floating support and the light source in a stationary position or vice versa, that is, the light source on the floating support and the image sensor in a stationary position. In this case, the sensor receives the image projected directly instead of the reflected image.

Whichever arrangement is selected, there is the advantage that the light source (preferably a laser) is not pointed towards the operator. Moreover, the system according to the invention eliminates the occupation of external space and consequently eliminates the risk of crushing between the vehicle and the fixed structure.

The toe-in measurement cycle provides for a preliminary step in the course of which the wheel is rotated and a large number of measurements are taken of the angle of rotation of the support (for example, one measurement for each degree of angular rotation of the wheel).

The arithmetic mean of the values acquired is then calculated so as to determine a mean toe-in angle of the wheel. The wheel is then stopped and the toe-in angle is measured in the position in which the wheel has stopped, which will be the position in which the adjustment is made. A comparison of the value of the toe-in measured in the wheel-adjustment position with the mean value (obtained from the arithmetic mean of the measurements taken with the wheel rotating) provides a corrective coefficient which enables the adjustment to be carried out on the basis of the mean value of the toe-in angle of the wheel. The system indicates the magnitude of the correction to the operator, taking account of the correction factor, and updates the data dynamically as the adjustment proceeds.

The system measures the angle of rotation of the support relative to a predetermined reference position and constantly checks that the support is within the field in which it is free to move. Should one of the supports leave the field of free movement, the system interrupts the measurement and activates an indicator device which warns the operator that the current measurement is not reliable.

The system according to the invention is based upon the fact that the supports follow the orientation of the respective wheels. In order to confirm the validity of the theoretical method of measuring the toe-in based upon the detection of the angles of the floating supports, experimental tests were carried out with the use, as the reference system, of a measurement device based on conventional measurement technology by means of feelers in contact with the sides of the tyre.

Known wheel angles detected by means of the conventional system (feelers on the sides of the tyre) were set by means of the tie-rods for adjusting the toe-in of the front wheels of a test vehicle. The angles of rotation of the supports for each angle set were correspondingly measured. The purpose of the measurement was to check the existence of a linear relationship between the angular position of the wheel and the corresponding position of the support.

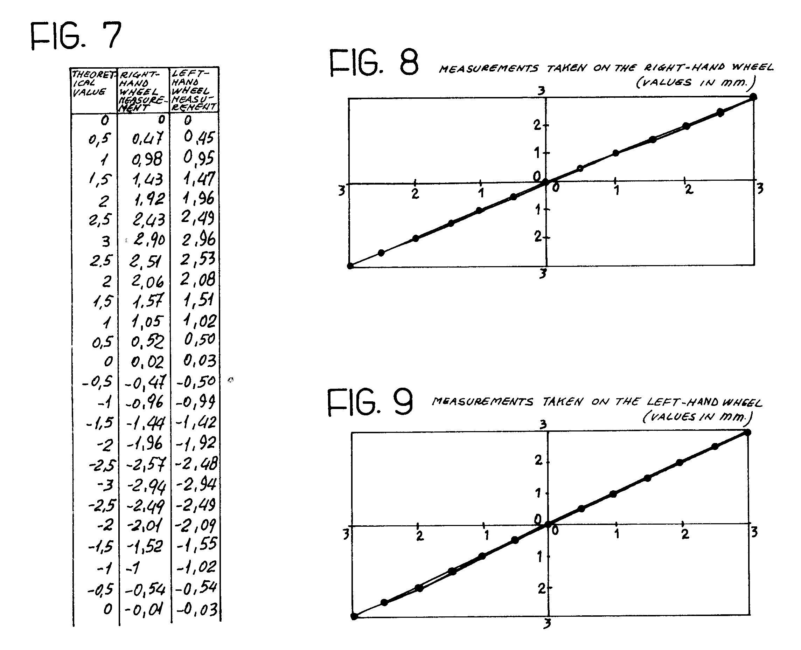

The table of Figure 7 indicates in the left-hand column, the toe-in values (expressed as mm of difference between the inner and outer diameters of the rims) for a series of 0.5 mm increments from a value of 0 up to 3 mm and subsequent decrements, again of 0.5 mm, to a value of -3 mm, with a final return to zero. The left-hand column contains the toe-in values measured by means of the conventional system which uses feelers in contact with the sides of the tyre. The central column and the right-hand column of the table of Figure 7 contain the toe-in angles of the right-hand wheel and of the left-hand wheel measured on the basis of the angle of rotation of the supports. The measurement was carried out with the use of a pair of centesimal indicators for each support. The values given in Figure 7 and the graphs of Figures 8 and 9 show the existence of a 1:1 linear relationship between the position of the wheel and the position of the support with maximum deviations of 0.1 mm which correspond essentially to the measurement resolution of the reference system used. This experimental check also shows that hysteresis phenomena owing to friction in the positioning of the support have a negligible effect.

**Claims**

1. A method for measuring the toe-in of the wheels of an axle of a vehicle, characterized in that it comprises the steps of:

   - placing the wheels ($W_L$, $W_R$) on respective supports (12, 14) each of which is free to move in a plane substantially parallel to the axis of rotation of the respective wheel, each of the supports (12, 14) having engagement means (20, 22) for ensuring that the support (12, 14) follows the orientation of the respective wheel, and

   - measuring the angle of rotation of the supports relative to a predetermined reference position and calculating the toe-in as a function of the angles of rotation of the supports (12, 14).

2. A method according to Claim 1, characterized in that the angle of rotation of each support (12, 14) is measured by a method which comprises the steps of:

   - receiving a luminous geometrical figure indicative of the angular position of the support, by means of an image sensor (36),

   - converting the reflected image into corresponding electrical signals, and

   - processing the electrical signals so as to obtain a signal indicative of the angular position of the support (12, 14) in its plane of movement.

3. A method according to Claim 2, characterized in that it comprises the steps of determining the position of at least one reference point (48) fixed to the support (12, 14) in the plane of movement of each support and checking if this reference point (48) is within a field (56) corresponding to the range (16, 18) of free movement of the support.

4. A method according to Claim 3, characterized the reflected image (50) has a substantially linear shape with at least one point of discontinuity (52) corresponding to the reference point (48), and in that the angular position of the support (12, 14) is determined as a function of the inclination ($\alpha'$) of the reflected line (50) to a reference axis (54).

5.  A method according to any one of the preceding claims, characterized in that, in order to adjust the toe-in of the wheels, the wheels are rotated on the supports and the angles of rotation of the supports are measured in a plurality of distinct angular positions of the wheels, a mean value of the toe-in is calculated as a function of the angles of rotation of the supports, the wheels are then stopped and the toe-in is measured in the wheel position in which the toe-in is adjusted, the value measured in the adjustment position being compared with the mean toe-in value to determine a correction coefficient which enables the adjustment to be carried out with reference to the mean toe-in value.

6.  A system for measuring the toe-in between the wheels of an axle of a vehicle, characterized in that it comprises:

    -   a pair of supports (12, 14) for supporting respective wheels ($W_L$, $W_R$), each support being free to move in a plane parallel to the axis of rotation of the wheel and having engagement means (20, 22) for ensuring that the support follows the orientation of the respective wheel, and

    -   means for measuring the angle of rotation of the supports (12, 14) relative to a predetermined reference position and for calculating the toe-in as a function of the angles of rotation of the supports ($\gamma_L$, $\gamma_R$).

7.  A system according to Claim 6, characterized in that the means for measuring the angle of rotation of the supports comprise a light source (26) and an image sensor (36) for receiving a luminous geometrical figure indicative of the angular position of the respective support (12, 14).

8.  A system according to Claim 7, characterized in that it comprises processing means (40, 42) for determining the angle of rotation of each support (12, 14) as a function of the angular position of the reflected image relative to a reference axis.

# FIG. 1

# FIG. 2

EP 0 819 910 A1

EP 0 819 910 A1

# FIG. 3

# FIG. 4

FIG. 5

FIG. 6

EP 0 819 910 A1

# FIG. 7

| THEORETICAL VALUE | RIGHT-HAND WHEEL MEASUREMENT | LEFT-HAND WHEEL MEASUREMENT |
|---|---|---|
| 0 | 0 | 0 |
| 0,5 | 0,47 | 0,45 |
| 1 | 0,98 | 0,95 |
| 1,5 | 1,43 | 1,47 |
| 2 | 1,92 | 1,96 |
| 2,5 | 2,43 | 2,49 |
| 3 | 2,90 | 2,96 |
| 2,5 | 2,51 | 2,53 |
| 2 | 2,06 | 2,08 |
| 1,5 | 1,57 | 1,51 |
| 1 | 1,05 | 1,02 |
| 0,5 | 0,52 | 0,50 |
| 0 | 0,02 | 0,03 |
| -0,5 | -0,47 | -0,50 |
| -1 | -0,96 | -0,99 |
| -1,5 | -1,44 | -1,42 |
| -2 | -1,96 | -1,92 |
| -2,5 | -2,57 | -2,48 |
| -3 | -2,94 | -2,94 |
| -2,5 | -2,49 | -2,49 |
| -2 | -2,01 | -2,09 |
| -1,5 | -1,52 | -1,55 |
| -1 | -1 | -1,02 |
| -0,5 | -0,54 | -0,54 |
| 0 | -0,01 | -0,03 |

FIG. 8    MEASUREMENTS TAKEN ON THE RIGHT-HAND WHEEL (VALUES IN mm.)

FIG. 9    MEASUREMENTS TAKEN ON THE LEFT-HAND WHEEL (VALUES IN mm.)

EP 0 819 910 A1

European Patent
Office

**EUROPEAN SEARCH REPORT**

Application Number

EP 96 83 0391

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | GB-A-2 246 204 (HONDA MOTOR CO LTD) * page 7 - page 15; figures 1-3 * | 1,6 | G01B11/275 G01B7/315 |
| Y | | 2,3,7,8 | |
| Y | EP-A-0 460 470 (BEAR AUTOMOTIVE SERVICE EQUIP) * abstract; figures 1,3,4,7 * | 2,3,7,8 | |
| A | US-A-5 287 626 (REICH DENNIS A) * abstract; figures 1,2 * | 1,5,6 | |
| A | DE-A-42 11 715 (FEMBOECK JOSEF) * abstract; figure 1 * | 1,6 | |
| A | EP-A-0 011 492 (REPCO RES PTY LTD) * abstract; figures 1,2,4 * | 1,6 | |

TECHNICAL FIELDS
SEARCHED      (Int.Cl.6)

G01B

The present search report has been drawn up for all claims

| Place of search | Date of completion of the search | Examiner |
|---|---|---|
| BERLIN | 15 November 1996 | Vorropoulos, G |